# NEUE EUROPÄISCHE PATENTSCHRIFT

(11) **EP 0 499 846 B2**
(45) Veröffentlichungstag und Bekanntmachung des Hinweises auf die Entscheidung über den Einspruch: **11.03.1998**
(45) Hinweis auf die Patenterteilung: 05.04.1995
(21) Anmeldenummer: 92101435.3
(22) Anmeldetag: 29.01.1992
(51) Int. Cl.: G01G 3/14, G01L 1/22

(54) **Biegering-Kraftaufnehmer**
Flex-ring force transducers
Capteurs de force du type d'anneau à flexion

(30) Priorität: 18.02.1991 DE 4104926
(43) Veröffentlichungstag der Anmeldung: 26.08.1992
(73) Patentinhaber: GTM GASSMANN THEISS MESSTECHNIK GMBH, D-64342 Seeheim-Jugenheim (DE)
(72) Erfinder: Gassmann, Helmut, Dr.-Ing., W-6104 Seeheim-Jugenheim (DE)
(74) Vertreter: Katscher, Helmut, Dipl.-Ing.

(56) Entgegenhaltungen:
- EP-A- 0 288 985
- EP-A- 0 338 325
- EP-A- 0 351 006
- EP-A- 0 465 881
- DE-A- 2 729 064
- WAGEN UND DOSIEREN, Bd. 20, Nr. 4, Juli 1990, Mainz, DE, Seiten 10- 14; M. BRACHAT, H.GASSMANN: "Neue, hochauflösende Biegering-Wägezelle"
- Energy & Automation, Bd.12, Nr.3, Mai/Juni 1990, Berlin, DE; Seiten 32, 33; H.Gassmann, M. Knoeller: "A look inside new flex-ring load cells"
- SOVIET INVENTIONS ILLUSTRATED, Section EI, Week 8823, 9. Juni 1988, Derwent Publications Ltd., London, GB; Class S, Page 23, AN 88-160425/23 & SU-A-1352256
- SOVIET PATENTS ABSTRACTS, Section EI, Week 9041, 21. November 1990, Derwent Publications Ltd., London, GB; Class S, Page 18, AN 90-311596/41 & SU-A-1530945
- Messtechnische Briefe, (HBM) 22(1986), Heft 2, Seiten 47-52

## Beschreibung

Die Erfindung betrifft Biegering-Kraftaufnehmer mit einem äußeren Lagerring und einem inneren Krafteinleitungkörper, die jeweils über einen inneren bzw. äußeren ringförmigen Kraftübertragungssteg mit einem konzentrisch dazwischen angeordneten Biegering verbunden sind, der in axialem Abstand zueinander angeordnete Dehnungsmeßelemente trägt.

Derartige Biegering-Kraftaufnehmer, die auch als Wägezellen bezeichnet werden, sind bekannt (DE-PS 37 14 613).

Sie zeichnen sich durch hohe Meßgenauigkeit aus und können auch für hohe Nennlasten mit verhältnismäßig geringen Abmessungen hergestellt werden. Eine der wesentlichen meßtechnischen Eigenschaften dieser Biegering-Kraftaufnehmer ist eine verhältnismäßig geringe Hysterese. Als Hysterese oder Umkehrspanne wird die Differenz der bei gleicher Last bei der Belastung bzw. Entlastung erhaltenen Signale bezeichnet.

Bekannt ist auch (Aufsatz R. Hellwig "Präzisions-Kraftaufnehmer" in "Meßtechnische Briefe" 22 (1986), Heft 2, Seiten 47-52), Kraftaufnehmer so anzuordnen, daß auch bei einer Winkelabweichung der Krafteinleitung keine Seitenkräfte in den Kraftaufnehmer eingeleitet werden. Dort werden unterschiedliche Fehlereinflüsse durch schaltungstechnische Maßnahmen kompensiert. Eine besondere Maßnahme zur Beeinflussung der Umkehrspanne (Hysterese) ist jedoch nicht angegeben.

Biegering-Kraftaufnehmer der eingangs genannten Bauart können zwar im Gegensatz zu den meisten anderen Aufnehmerkonstruktionen einen Hysteresefehler von weniger als 100 ppm bezogen auf den Belastungsendwert auch bei Kräften über 20 kN erreichen; gleichwohl stellen aber die Hysteresefehler auch bei Biegering-Kraftaufnehmern die Grenze für eine weitere Steigerung der Meßgenauigkeit dar.

Es ist bekannt, daß die Hysterese von Kraftaufnehmern mehrere Ursachen haben kann, die meist zusammengesetzt auftreten. Neben Fließ- und Kriechvorgängen der Applikation der Dehnungsmeßelemente kann auch das Widerstandsverhalten der Dehnungsmeßelemente zu Hysterese führen. In der mechanischen Konstruktion der Kraftaufnehmer liegende Ursachen für die Hysterese wurden bisher nur darin gesehen, daß plastische Verformungen des Aufnehmerwerkstoffs in hochbeanspruchten Bereichen auftreten. Ziel der bisherigen Maßnahmen zur Verringerung von Hysterese im mechanisch-konstruktiven Bereich war es daher, solche hochbeanspruchten Bereiche zu vermeiden bzw. die Beanspruchungsspitzen herabzusetzen. Trotz der hierfür ergriffenen Maßnahmen stellt der verbleibende Hysteresefehler noch eine wesentliche Grenze für die Steigerung der Meßgenauigkeit derartiger Biegering-Kraftaufnehmer dar.

Ein nicht vorveröffentlichtes, älteres Dokument EP-A2-465 881 zeigt zwar ein konzentrisches Rohrstück zur Abstützung des äußeren Lagerrings eines Kraftaufnehmers. Dieses Rohrstück ist aber nicht unmittelbar auf der tragenden Fläche abgestützt, sondern ist an seinem unteren Ende mit einem Montagefuß versehen, der angeschraubt ist. Das konzentrische Rohrstück dient nur dazu, Montageeinflüsse vom Biegering fernzuhalten. Reibungsbedingte Hysteresefehler sind damit nicht zu vermeiden.

Ein anderer bekannter Aufnehmer (EP-A2-465 881) weist keinen Biegering auf. Die Krafteinleitung erfolgt nicht nur von oben, sondern auch von unten zentral, so daß sich das Problem der reibungsbedingten Hysteresefehler nicht stellt. Außerdem stützt sich der dort gezeigte konzentrische Rohrabschnitt nicht auf der tragenden Fläche ab, sondern ist am Rand einer verhältnismäßig dicken Gehäuseplatte ausgebildet.

Aufgabe der Erfindung ist es daher, eine weitere Verringerung des Hysteresefehlers bei Biegering-Kraftaufnehmern zu erreichen. Diese Aufgabe wird erfindungsgemäß mit den Merkmalen der unabhängigen Ansprüche gelöst - 1, 2, 3, 6, 11.

Mit der Erfindung wurde erstmalig erkannt, daß Biegering-Kraftaufnehmer der gattungsgemäßen Bauart an den Krafteinleitungsstellen sowohl am inneren Krafteinleitungskörper als auch am äußeren Lagerring Radialkräfte auftreten, die zu bisher nicht erkannten Reibvorgängen führen. Solche Reibvorgänge sind die Ursache für eine Hysterese, sogar in überwiegendem Maße.

Im Rahmen der Erfindung wurde erkannt, daß insbesondere für große Nennlasten eine erhebliche weitere Verringerung des Hysteresefehlers durch alle diejenigen Maßnahmen erreicht werden kann, die dazu geeignet sind, den Einfluß von Radialbewegungen an den Krafteinleitungsstellen auf die Verformung des Biegerings zu vermeiden oder zumindest zu verringern. Hierfür können sehr unterschiedliche Maßnahmen eingesetzt werden.

Die Krafteinleitung kann so erfolgen, daß die auftretenden Radialbewegungen nicht zu einer Reibung, sondern nur zu einer Verformung eines leicht verformbaren Bauteils führen. Um eine ausreichend radialkraftfreie Krafteinleitung am äußeren Lagerring zu erreichen, kann der Lagerring über ein konzentrisches dünnwandiges Rohrstück abgestützt werden. Bei hoher axialer Steifigkeit ist dieses Rohrstück radial so elastisch, daß es unter dem Einfluß der Radialbewegungen verformt wird, ohne daß Reibung auftritt.

In entsprechender Weise kann auch die Krafteinleitung am inneren Krafteinleitungskörper über ein konzentrisches dünnwandiges Rohrstück erfolgen, um radiale Kräfte zu vermeiden.

Eine andere Möglichkeit der radialkraftfreien Krafteinleitung am äußeren Lagerring besteht darin, daß die ringförmige Abstützfläche des Lagerrings auf gleichem Duchmesser liegt wie der äußere Kraftübertragungssteg des Biegerings. Dadurch fallen die Einleitungsstelle der Abstützkraft und der äußere Drehpunkt des Biegerings zusammen. Auf den äußeren Lagerring wird daher kein Moment ausgeübt, so daß der Lagerring sich nicht bewegt und daher auch keine Radialkräfte verursacht.

Gemäß einer anderen Ausgestaltung des Erfindungsgedankens wird eine radialkraftfreie Krafteinleitung am Lagerring dadurch erreicht, daß der Lagerring axial über einen Ringsteg mit einem konzentrischen Abstützring verbunden ist, der wiederum auf einer ringförmigen Abstützfläche abgestützt ist, deren Durchmesser kleiner als der Durchmesser des Ringstegs ist. Der äußere Lagerring neigt sich bei axialer Krafteinleitung zur Oberkante des Biegerings hin. Der über die ringförmige Abstützfläche angeschlossene Abstützring bewegt sich wegen der demgegenüber etwas nach innen versetzten Krafteinleitungsstelle in entgegengesetzter Richtung. Auf diese Weise kann erreicht werden, daß sich der Kraftübertragungssteg, an dem der Biegering angeschlossen ist, radial nicht bewegt. Durch eine Verlagerung der Krafteinleitungsstelle nach innen oder außen kann bei dieser Ausführung aber auch gezielt eine Hysterese erzeugt werden, wenn es erwünscht ist, entgegengesetzt gerichtete Hysteresen aus anderen Ursachen zu kompensieren.

Am inneren Krafteinleitungskörper kann eine radialkraftfreie Krafteinleitung dadurch erreicht werden, daß ein Elastomer-Lager verwendet wird, vorzugsweise ein Lager aus PTFE (Polytetrafluorethylen).

Anstelle der genannten Maßnahmen, die darauf gerichtet sind, Radialbewegungen und reibungsbehaftete Radialkräfte zu vermeiden, kann erfindungsgemäß auch vorgesehen werden, Radialkräfte und reibungsbehaftete radiale Bewegungen zwar zuzulassen, die Krafteinleitung aber an einer solchen Stelle vorzunehmen, daR dies ohne Einfluß auf den Biegering ist. Gemäß einer Ausgestaltung des Erfindungsgedankens geschieht dies dadurch, daß die Krafteinleitung am Krafteinleitungskörper und/oder am Lagerring in einer Ebene erfolgt, die mindest angenähert mit der die ringförmigen Kraftübertragungsstege enthaltenden Mittelebene zusammenfällt.

Weitere vorteilhafte Ausgestaltungen sind Gegenstand weiterer Unteransprüche.

Mit den erfindungsgemäßen Maßnahmen ist es möglich, Biegering-Kraftaufnehmer hoher Nennlast zu bauen, deren Meßfehler unter 100 ppm liegen.

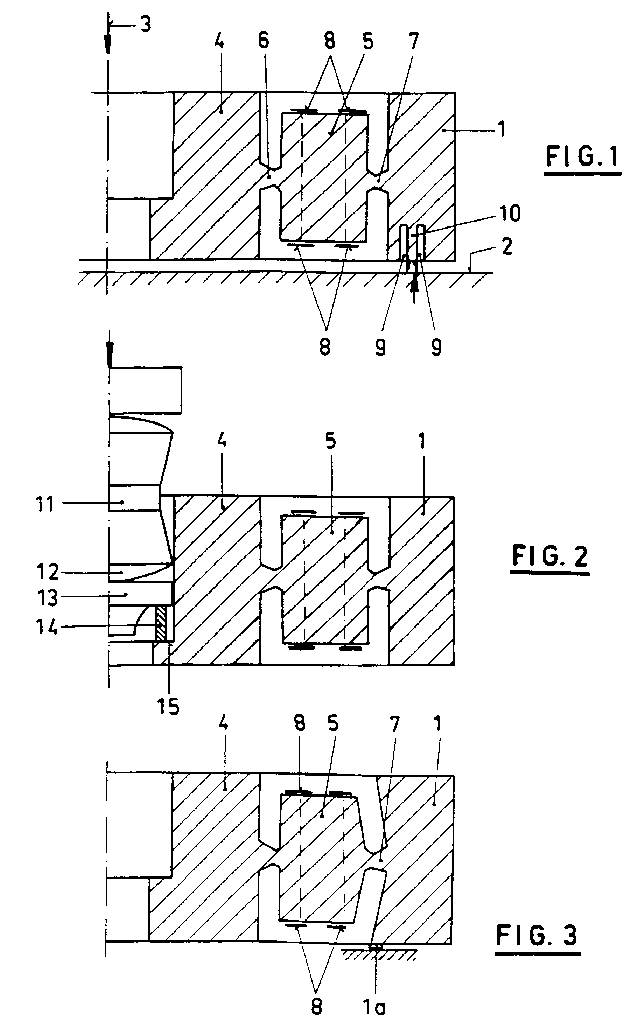

Die Erfindung wird nachfolgend an Ausführungsbeispielen näher erläutert, die in der Zeichnung dargestellt sind. Die Fig. 1-9 zeigen jeweils in einem senkrechten Halbschnitt unterschiedliche Ausführungsformen von Biegering-Kraftaufnehmern.

Der in Fig. 1 gezeigte Biegering-Kraftaufnehmer weist einen äußeren Lagerring 1 auf, der sich auf einer Fläche 2 abstützt. Die zu messende Kraft wird in Richtung eines Pfeiles 3 axial auf einen inneren Krafteinleitungskörper 4 aufgebracht. Zwischen dem inneren Krafteinleitungskörper 4 und dem äußeren Lagerring 1 ist konzentrisch ein Biegering 5 angeordnet, der mit dem Krafteinleitungskörper 4 über einen ringförmigen Kraftübertragungssteg 6 und mit dem Lagerring 1 über einen ringförmigen Kraftübertragungssteg 7 verbunden ist, die jeweils Gelenke bilden und in einer gemeinsamen Ebene liegen.

An der Oberseite und der Unterseite des Biegerings 5 sind Dehnungsmeßelemente 8 aufgebracht, beispielsweise Dehnungsmeßstreifen, die bei einer Dehnung oder Stauchung ihren elektrischen Widerstand ändern und auf diese Weise ein der zu messenden Kraft entsprechendes Meßsignal an eine (nicht dargestellte) Auswerteschaltung liefern.

Wenn die zu messende Kraft in Richtung des Pfeiles 3 auf den Krafteinleitungskörper 4 aufgebracht wird, verformt sich der Biegering 5 in der Weise, daß er sich an seiner Oberseite nach innen und an seiner Unterseite nach außen neigt, wodurch die oben angebrachten Dehnungsmeßelemente 8 gestaucht und die unten angebrachten Dehnungsmeßelemente 8 gedehnt werden.

Bei allen dargestellten Ausführungsbeispielen sind der Krafteinleitungskörper 4, der Biegering 5 und der Lagerring 1 einstückig als Drehteil ausgeführt.

Beim Ausführungsbeispiel nach Fig. 1 ist durch zwei ringförmige Einstiche 9 im unteren Bereich des Lagerrings 1 ein konzentrisches dünnwandiges Rohrstück 10 gebildet, das sich an der Fläche 2 abstützt. Dieses Rohrstück 10 ist in axialer Richtung ausreichend steif, um die zu messende Kraft zu übertragen; in radialer Richtung ist das Rohrstück 10 jedoch sehr elastisch. Die bei einer Belastung des Biegering-Kraftaufnehmers auftretende Verformung des Lagerrings 1 führt daher nicht zu einer reibungsbehafteten Radialbewegung, sondern wird durch eine Verformung des Rohrstücks 10 aufgefangen. Dadurch wird der Biegering 5 und insbesondere die darauf angebrachten Dehnungsmeßelemente 8 von etwaigen Radialkrafteinflüssen bei der Krafteinleitung am Lagerring 1 freigehalten.

Wie in Fig. 2 gezeigt, kann durch eine entsprechende Maßnahme auch bei der Krafteinleitung am inneren Krafteinleitungskörper 4 ein Radialkrafteinfluß vermieden werden. Die zu messende Axialkraft wird hierbei über einen Pendelkörper 11 eingeleitet, der sich mit einer Kugelfläche 12 auf einer Druckscheibe 13 abstützt. Die Druckscheibe 13 ist über ein konzentrisches dünnwandiges Rohrstück 14 an einer inneren Schulter 15 des Krafteinleitungskörpers 4 abgestützt. In der schon vorher beschriebenen Weise werden auch hier etwaige Radialbewegungen durch die radiale Elastizität des axial steifen Rohrstücks 14 aufgefangen.

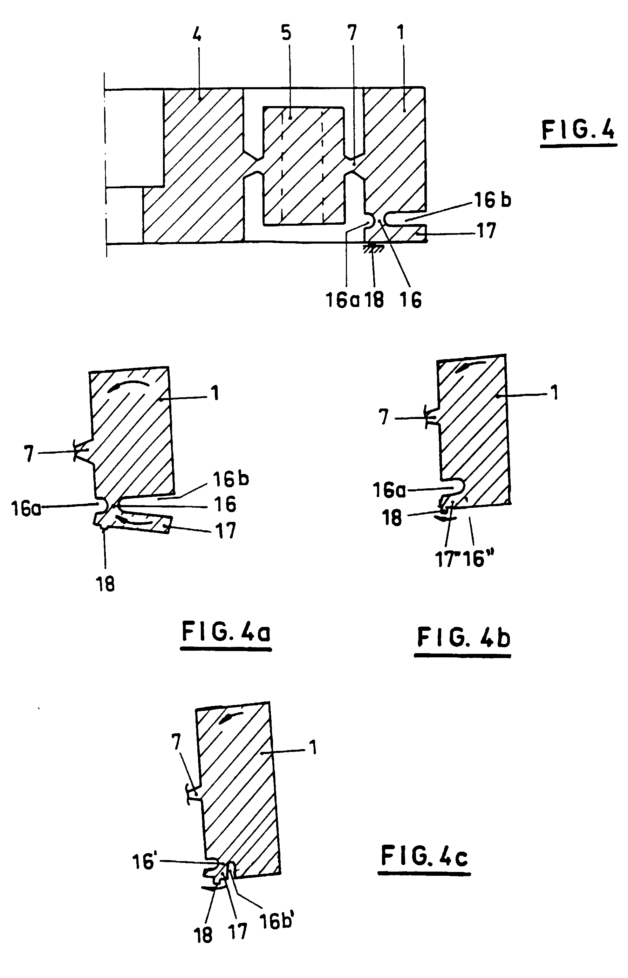

Beim Beispiel nach Fig. 3 ist die Abstützfläche 1a, an der sich der Lagerring 1 abstützt, so weit nach innen verlagert, daß sie angenähert auf dem gleichen Durchmesser liegt wie der äußere Kraftübertragungssteg 7. Dadurch wird auf den äußeren Lagerring 1 kein verdrehendes Moment ausgeübt, so daß auch keine Radialbewegung an der Abstützfläche 1a erzeugt wird.
Bei dem Ausführungsbeispiel nach Fig. 4 ist der Lagerring 1 axial über einen ein Biegegelenk bildenden Ringsteg 16 mit einem konzentrischen Abstützring 17 verbunden, der an seiner Unterseite die ringförmige Abstützfläche 18 aufweist. Am inneren Durchmesser des Lagerrings 1 ist der Abstützring 17 durch eine sich bis zum Ringsteg 16 erstreckende innere radiale Nut 16a, die von einem Einstich gebildet wird, vom Lagerring 1 getrennt. Auf der gegenüberliegenden Seite des Ringstegs 16 ist eine weitere Nut 16b eingestochen. Der Durchmesser der ringförmigen Abstützfläche 18 ist kleiner gewählt als der Durchmesser des Ringstegs 16. Dadurch ergibt sich bei Belastung die in Fig. 4a schematisch angedeutete Verformung. Der Lagerring 1 neigt sich mit seiner Oberseite zum Biegering 5 hin; der Abstützring 17 bewegt sich in entgegengesetzter Richtung. Diese beiden Schwenkbewegungen sind in Fig. 4a jeweils mit Pfeilen angedeutet. Dadurch kann erreicht werden, daß sich der Kraftübertragungssteg 7 radial nicht verlagert, so daß die Verformung des Lagerrings 1 ohne Einfluß auf den Biegering 5 bleibt.

In den Fig. 4b und 4c sind in entsprechender Darstellungsweise wie in Fig. 4a abgewandelte Ausführungsformen dargestellt. Bei der Ausführungsform nach Fig. 4b enffällt gegenüber der Ausführungsform nach Fig. 4a die äußere radiale Nut 16b; stattdessen ist eine axiale Nut 16b' von unten her eingestochen; auch hier wird der das Biegegelenk bildende Ringsteg 16' von den beiden Nuten 16a und 16b' begrenzt. Der Abstützring 17' dreht sich bei Belastung in der durch einen Pfeil angedeuteten, in Fig. 4b dargestellten Weise nach rechts, während sich der angeschlossene Lagerring 1 in der ebenfalls durch einen Pfeil angedeuteten Richtung entgegengesetzt dreht, so daß auch hierbei der Kraftübertragungssteg 7 radial nicht verlagert wird.

Das Ausführungsbeispiel nach Fig. 4c unterscheidet sich vom Ausführungsbeispiel nach Fig. 4b nur dadurch, daß die Nut 16b' weggelassen ist. Dadurch schließt sich der Ringsteg 16", der den Abstützring 17" mit dem Lagerring 1 verbindet, radial nach außen an den Abstützring 17" an; die sich ergebende Verformungsbewegung ist in Fig. 4c dargestellt und entspricht der bei den Fig. 4a und 4b beschriebenen Bewegung.

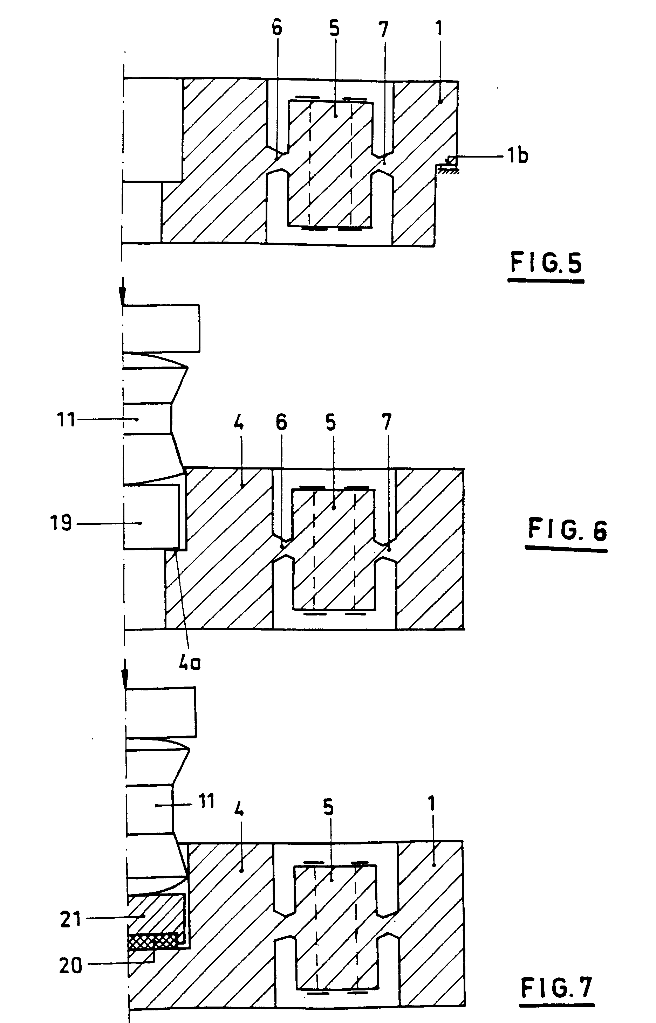

In Fig. 5 ist gezeigt, daß die Abstützung des Lagerrings 1 an einer äußeren Schulter 1b erfolgt. Diese Schulter 1b liegt angenähert in der durch die Kraftübertragungsstege 6 und 7 des Biegerings 5 bestimmten Normalebene. Obwohl hierbei Radialkräfte bei der Krafteinleitung in den Lagerring 1 auftreten, bleiben diese Radialkräfte ohne Einfluß auf die Messung.

In entsprechender Weise erfolgt auch beim Ausführungsbeispiel nach Fig. 6 die Krafteinleitung am inneren Krafteinleitungskörper 4 in der Ebene, die auch die Kraftübertragungsstege 6 und 7 des Biegerings 5 enthält. Hierzu stützt sich eine Pendelstütze 11 an einem Druckstück 18 ab, das auf einer inneren Schulter 4a des Krafteinleitungskörpers 4 liegt.

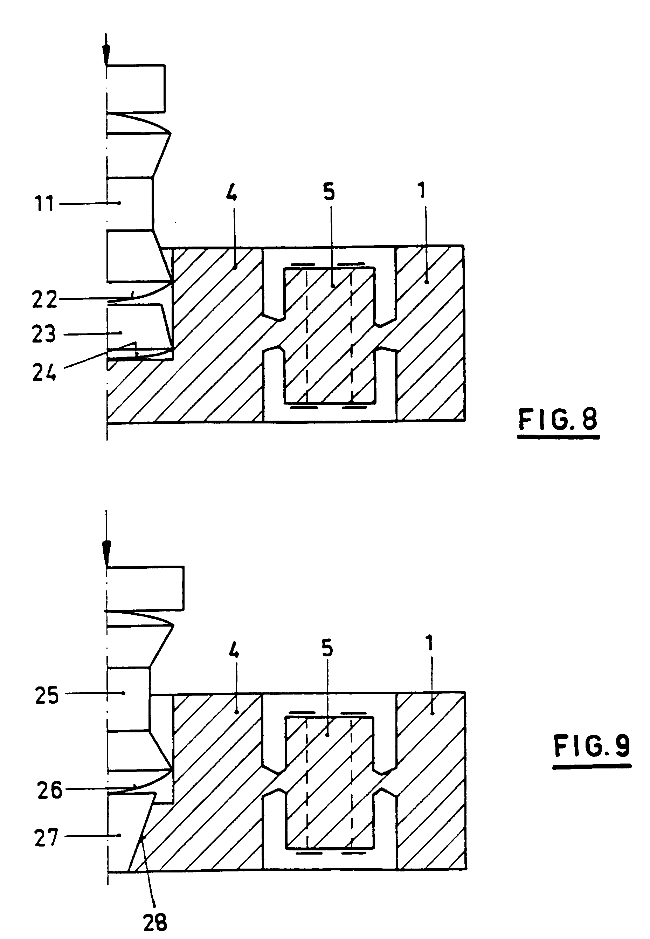

In Fig. 7 ist gezeigt, daß die bei der Krafteinleitung am inneren Krafteinleitungskörper 4 erzeugten Radialkräfte durch die Verwendung eines scheibenförmigen Elastomer-Lagers 20 weitgehend ausgeschlossen oder zumindest stark verringert werden können. Eine Pendelstütze 1 ruht auf einem Druckstück 21, das sich über das Elastomer-Lager 20 am Krafteinleitungskörper 4 abstützt.

In Fig. 8 ist ein Biegering-Kraftaufnehmer gezeigt, bei dem die Krafteinleitung über eine Pendelstütze 11 erfolgt, deren untere Kugeldruckfläche 22 einen Radius hat, der angenähert der Höhe der Pendelstütze 11 entspricht. Da die Radien der beiden Kugeldruckflächen der Pendelstütze 11 die seitliche Verlagerung der Krafteinleitungsfläche bei einer Auslenkung bestimmen, können diese Radien nicht sehr viel größer ausgeführt werden, als die Höhe der Pendelstütze 11. Da der Biegering-Kraftaufnehmer und damit auch der innere Krafteinleitungskörper 4 aber in einem Warmbehandlungszustand vorliegt, der keine sehr hohen Flächenpressungen zuläßt, würde die mit dem beschriebenen Radius ausgeführte Kugeldruckfläche 22 zu verhältnismäßig hohen radialen Kräften an der Krafteinleitungsstelle führen.

Deshalb wird bei der in Fig. 8 gezeigten Ausführung zwischen die Kugeldruckfläche 22 und die Auflagefläche des Krafteinleitungskörpers 4 ein gehärtetes Druckstück 23 eingesetzt, das sich wiederum mit einer Kugeldruckfläche 24, deren Radius wesentlich größer als der Radius der Kugeldruckfläche 22 ist, am Krafteinleitungskörper 4 abstützt. Da der Radius der Kugeldruckfläche 24 sehr groß gewählt werden kann, wird die Flächenpressung am Krafteinleitungskörper 4 so verringert, daß praktisch keine Radialkräfte mehr auftreten.

Bei einer seitlichen Verlagerung der Pendelstütze 11 bewegt sich das Druckstück 23 so, daß der Weg zwischen der Pendelstütze 11 und dem Druckstück 23 verringert wird. Da die seitliche Bewegung weitgehend eine Abrollbewegung ohne Gleiten ist, werden nur geringe Radialkräfte verursacht.

Bei dem in Fig. 9 gezeigten Ausführungsbeispiel erfolgt die Krafteinleitung am inneren Krafteinleitungskörper 4 über ein ebenfalls als Pendelstütze ausgeführtes Kugeldruckstück 25, das sich über eine Kugeldruckfläche 26 an einem kegelstumpfförmigen Druckstück 27 abstützt. Dieses kegelstumpfförmige Druckstück 27 ist in einer zentrischen konischen Bohrung 28 mit übereinstimmendem Kegelwinkel im Krafteinleitungskörper 4 aufgenommen. Die bei der Druckbelastung zwischen der Kugeldruckfläche 26 und der flachen Oberseite des Druckstücks 27 verursachte Radialbewegung wird durch eine entgegengesetzt gerichtete Radialbewegung kompensiert, die durch die an der Kegelfläche auftretenden, im Druckstück 27 radial nach innen gerichteten Kräfte verursacht wird. Durch die Wahl des Kegelwinkels läßt sich somit erreichen, daß eine Gleitbewegung zwischen der Kugeldruckfläche 26 und der Oberseite des Druckstücks 27 weitgehend vermieden wird.

Die zwischen dem kegelstumpfförmigen Druckstück 27 und der konischen Bohrung 28 auftretenden Stützkräfte stehen senkrecht auf der Berührungsfläche, so daß das kegelstumpfförmige Druckstück 27 und die konische Bohrung 28 die zu messende Kraft ohne Gleitbewegung übertragen. Vorzugsweise wird der Kegelwinkel im Bereich von 40 bis 50° gewählt.

## Patentansprüche

1. Biegering-Kraftaufnehmer mit einem äußeren Lagerring (1) und einem inneren Krafteinleitungkörper (4), die jeweils über einen inneren bzw. äußeren ringförmigen Kraftübertragungssteg (6, 7) mit einem konzentrisch dazwischen angeordneten Biegering (5) verbunden sind, der in axialem Abstand zueinander angeordnete Dehnungsmeßelemente (8) trägt, dadurch gekennzeichnet, daß der Biegering (5) in der Weise von reibungsbehafteten Radialkrafteinflüssen bei der Krafteinleitung am Lagerring (1) freigehalten ist, daß die Krafteinleitung am Lagerring (1) radialkraftfrei erfolgt, indem der Lagerring (1) über ein konzentrisches dünnwandiges Rohrstück (10) abgestützt ist, das sich unmittelbar auf einer Fläche (2) abstützt.

2. Biegering-Kraftaufnehmer mit einem äußeren Lagerring (1) und einem inneren Krafteinleitungkörper (4), die jeweils über einen inneren bzw. äußeren ringförmigen Kraftübertragungssteg (6, 7) mit einem konzentrisch dazwischen angeordneten Biegering (5) verbunden sind, der in axialem Abstand zueinander angeordnete Dehnungsmeßelemente (8) trägt, dadurch gekennzeichnet, daß der Biegering (5) in der Weise von reibungsbehafteten Radialkrafteinflüssen bei der Krafteinleitung am Lagerring (1) freigehalten ist, daß die Krafteinleitung am Lagerring (1) radialkraftfrei erfolgt, indem eine ringförmige Abstützfläche (1a) des Lagerrings (1) auf gleichem Durchmesser liegt wie der äußere Kraftübertragungssteg (7) des Biegerings (5).

3. Biegering-Kraftaufnehmer mit einem äußeren Lagerring (1) und einem inneren Krafteinleitungkörper (4), die jeweils über einen inneren bzw. äußeren ringförmigen Kraftübertragungssteg (6, 7) mit einem konzentrisch dazwischen angeordneten Biegering (5) verbunden sind, der in axialem Abstand zueinander angeordnete Dehnungsmeßelemente (8) trägt, dadurch gekennzeichnet, daß der Biegering (5) in der Weise von reibungsbehafteten Radialkrafteinflüssen bei der Krafteinleitung am Lagerring (1) freigehalten ist, daß die Krafteinleitung am Lagerring (1) radialkraftfrei erfolgt, indem der Lagerring (1) über einen ein Biegegelenk bildenden Ringsteg (16, 16', 16") mit einem konzentrischen Abstützring (17, 17', 17") verbunden ist und daß der Abstützring (17, 17', 17") auf einer ringförmigen Abstützfläche (18) abgestützt ist, deren Durchmesser kleiner als der Durchmesser des Ringstegs (16) ist.

4. Biegering-Kraftaufnehmer nach Anspruch 3, dadurch gekennzeichnet, daß der Abstützring (17, 17', 17") durch eine innere radiale Nut (16a) am inneren Durchmesser des Lagerrings (1) von diesem getrennt ist.

5. Biegering-Kraftaufnehmer nach Anspruch 4, dadurch gekennzeichnet, daß auf der inneren radialen Nut (16a) gegenüberliegenden Seite des Ringstegs (16, 16') eine weitere Nut (16b, 16b') eingestochen ist.

6. Biegering-Kraftaufnehmer mit einem äußeren Lagerring (1) und einem inneren Krafteinleitungskörper (4), die jeweils über einen inneren bzw. äußeren ringförmigen Kraftübertragungssteg (6, 7) mit einem konzentrisch dazwischen angeordneten Biegering (5) verbunden sind, der in axialem Abstand zueinander angeordnete Dehnungsmeßelemente (8) trägt, dadurch gekennzeichnet, daß der Biegering (5) in der Weise von reibungsbehafteten Radialkrafteinflüssen bei der Krafteinleitung am Krafteinleitungskörper (4) freigehalten ist, daß die Krafteinleitung am Krafteinleitungskörper (4) radialkraftfrei erfolgt.

7. Biegering-Kraftaufnehmer nach Anspruch 6, dadurch gekennzeichnet, daß die Krafteinleitung über ein Elastomer-Lager (20) erfolgt, vorzugsweise ein Lager aus PTFE.

8. Biegering-Kraftaufnehmer nach Anspruch 6, dadurch gekennzeichnet, daß die Krafteinleitung über ein konzentrisches dünnwandiges Rohrstück (14) erfolgt.

9. Biegering-Kraftaufnehmer nach Anspruch 6, dadurch gekennzeichnet, daß die Krafteinleitung über ein Kugeldruckstück (25) erfolgt, das sich über eine Kugeldruckfläche (26) an einem kegelstumpfförmigen Druckstück (27) abstützt, und daß das kegelstumpfförmige Druckstück (27) in einer zentrischen konischen Bohrung (28) des Krafteinleitungskörpers (4) aufgenommen ist.

10. Biegering-Kraftaufnehmer nach Anspruch 6, dadurch gekennzeichnet, daß die Krafteinleitung über eine Pendelstütze (11) erfolgt, die sich mit einer Kugeldruckfläche (22) an einem gehärteten Druckstück (23) abstützt, das sich wiederum mit einer Kugeldruckfläche (24) mit größerem Kugelradius am Krafteinleitungskörper (4) abstützt.

11. Biegering-Kraftaufnehmer mit einem äußeren Lagerring (1) und einem inneren Krafteinleitungskörper (4), die jeweils über einen inneren bzw. äußeren ringförmigen Kraftübertragungssteg (6, 7) mit einem konzentrisch dazwischen angeordneten Biegering (5) verbunden sind, der in axialem Abstand zueinander angeordnete Dehnungsmeßelemente (8) trägt, dadurch gekennzeichnet, daß der Biegering (5) in der Weise von reibungsbehafteten Radialkrafteinflüssen bei der Krafteinleitung am Lagerring (1) freigehalten ist, daß die Krafteinleitung am Lagerring (1) in einer Ebene erfolgt, die mindestens angenähert mit der die ringförmigen Kraftübertragungsstege (6, 7) enthaltenden Mittelebene zusammenfällt.

## Claims

1. Flex-ring force transducer with an external bearing ring (1) and an internal force-introduction body (4) which are in each case joined through an internal or external ring-shaped force-transmission web (6, 7) to a flex-ring (5) located concentrically between them, said ring carrying strain-gauge elements (8) located at an axial distance from each other, characterized in that the flex-ring (5) is kept free from friction-affected radial force influences in this manner in the case of the introduction of force at the bearing ring (1), that the introduction of force at the bearing ring (1) takes place free from radial force, whilst the bearing ring (1) is supported through a concentric, thin-walled tube piece (10) which is supported directly on a surface (2).

2. Flex-ring force transducer with an external bearing ring (1) and an internal force-introduction body (4) which are in each case joined through an internal or external ring-shaped force-transmission web (6, 7) to a flex-ring (5) located concentrically between them, said ring carrying strain-gauge elements (8) located at an axial distance from each other, characterized in that the flex-ring (5) is kept free from friction-affected radial force influences in this manner at the introduction of force at the bearing ring (1), that the introduction of force at the bearing ring (1) takes place free from radial force, whilst a ring-shaped support surface (1a) of the bearing ring (1) lies on the same diameter as the external force-transmission web (7) of the flex-ring (5).

3. Flex-ring force transducer with an external bearing ring (1) and an internal force-introduction body (4) which are ill each case joined through an internal or external ring-shaped force-transmission web (6, 7) to a flex-ring (5) located concentrically between them which carries strain-gauge elements (8) located at an axial distance from each other, characterized in that the flex-ring (5) is kept free in this manner from friction-affected radial force influences during the introduction of force at the bearing ring (1), that the introduction of force at the bearing ring (1) takes place free from radial force, whilst the bearing ring (1) is joined through a ring web (16, 16', 16") forming a flex-link to a concentric support ring (17, 17', 17") and that the support ring (17, 17', 17") is supported on a ring-shaped support surface (18), the diameter of which is smaller than the diameter of the ring web (16).

4. Flex-ring force transducer according to Claim 3, characterized in that the support ring (17, 17', 17") is separated by an internal radial groove (16a) at the internal diameter of the bearing ring (1) from the latter.

5. Flex-ring force transducer according to Claim 4, characterized in that, on the side of the ring web (16, 16') opposite the internal groove (16a), a further groove (16b, 16b') has been recessed.

6. Flex-ring force transducer with an external bearing ring (1) and an internal force-introduction body (4) which are in each case joined, through an internal or external ring-shaped force-transmission web (6, 7) to a flex-ring (5) located concentrically between them, which carries strain-gauge elements (8) located at an axial distance from each other, characterized in that the flex-ring (5) is kept free in this manner from friction-affected radial force influences in the introduction of force at the force-introduction body (4), that the introduction of force at the force-introduction body (4) takes place free from radial force.

7. Flex-ring force transducer according to Claim 6, characterized in that the introduction of force takes place through an elastomer bearing (20), preferably a bearing made of PTFE.

8. Flex-ring force transducer according to Claim 6, characterized in that the introduction of force takes place through a concentric, thin-walled tube piece (14).

9. Flex-ring force transducer according to Claim 6, characterized in that the introduction of force takes place through a spherical thrust piece (25) which is supported through a spherical pressure surface (26) on a truncated-cone-shaped thrust piece (27), and that the truncated-cone-shaped thrust piece (27) is held in a centric conical hole (28) of the force-introduction body (4).

10. Flex-ring force transducer according to Claim 6, characterized in that the introduction of force takes place through a pendulum support (11) which is supported by a spherical pressure surface (22) on a hardened thrust piece (23) which is in turn supported by a spherical pressure surface (24) with a larger spherical radius on the force-introduction body (4).

11. Flex-ring force transducer with an external bearing ring (1) and an internal force-introduction body (4), joined in each case through an internal or external ring-shaped force-transmission web (6, 7) to a flex-ring (5) located concentrically between them which carries strain-gauge elements (8) located at an axial distance from each other, characterized in that the flex-ring (5) is kept free in this manner from friction-affected radial force influences during the introduction of force at the bearing ring (1), that the introduction of force at the bearing ring (1) takes place in a plane which, at least approximately, coincides with the centre plane containing the ring-shaped force-transmission webs (6, 7).

## Revendications

1. Transducteur de force à anneau de flexion comportant un palier annulaire externe (1) et un corps inducteur de forces interne (4), qui sont raccordés respectivement via une arête de transmission de forces annulaire interne ou externe (6, 7) à un anneau de flexion (5) agencé concentriquement entre eux, cet anneau de flexion portant des éléments de mesure de l'allongement (8) agencés à distance axiale l'un de l'autre, caractérisé en ce que l'anneau de flexion (5) est protégé des influences des forces radiales par friction lors de l'induction des forces sur la palier annulaire (1) de manière que l'induction de forces sur le palier annulaire (1) se fasse sans forces radiales en soutenant le palier annulaire (1) par un élément tubulaire concentrique à paroi mince (10) qui s'appuie directement dur une surface (2).

2. Transducteur de force à anneau de flexion comportant un palier annulaire externe (1) et un corps inducteur de forces interne (4), qui sont raccordés respectivement via une arête de transmission de forces annulaire interne ou externe (6, 7) à un anneau de flexion (5) agencé entre eux de manière concentrique, ledit anneau de flexion portant des éléments de mesure de l'allongement (8) agencés à distance axiale l'un de l'autre, caractérisé en ce que l'anneau de flexion (5) est protégé des influences de forces radiales par friction lors de l'induction des forces sur le palier annulaire (1) de manière que l'induction de forces sur le palier annulaire (1) se fasse sans forces radiales en faisant en sorte qu'une surface d'appui annulaire (1a) du palier annulaire (1) ait le même diamètre que l'arête de transmission de forces externe (7) de l'anneau de flexion (5).

3. Transducteur de force à anneau de flexion comportant un palier annulaire externe (1) et un corps inducteur de forces interne (4), qui sont raccordés respectivement via une arête de transmission de forces annulaire interne ou externe (6, 7) à un anneau de flexion (5) agencé concentriquement entre eux, qui porte des éléments de mesure d'allongement (8) agencés à distance axiale l'un de l'autre, caractérisé en ce que l'anneau de flexion (5) est protégé des influences des forces radiales par friction lors de l'induction des forces sur le palier annulaire (1) de manière que l'induction des forces sur le palier annulaire (1) se fasse sans forces radiales, en faisant en sorte que la palier annulaire (1) soit raccordé via une arête annulaire (16, 16', 16" ) formant une articulation de flexion à un anneau d'appui concentrique (17, 17', 17") et en faisant en sorte que l'anneau d'appui (17, 17', 17") s'appuie sur une surface d'appui annulaire (18), dont le diamètre est plus petit que celui de l'arête annulaire (16).

4. Transducteur de force à anneau: de flexion selon la revendication 3, caractérisé en ce que l'anneau d'appui (17, 17', 17") est séparé du palier annulaire (1) par une rainure radiale interne (16a) sur le diamètre externe de celui-ci.

5. Transducteur de force à anneau de flexion selon la revendication 4, caractérisé en ce qu'une autre rainure (16b, 16b') est fraisée sur le côté de l'arête annulaire (16, 16') en regard de la rainure radiale interne (16a).

6. Transducteur de force à anneau de flexion comportant un palier annulaire externe (1) et un corps inducteur de forces interne (4), qui est raccordé respectivement vie une arête de transmission de forces annulaire interne ou externe (6, 7) à un anneau de flexion (5) agencé concentriquement entre eux, qui porte des éléments de mesure d'allongement (8) agencés à distance axiale l'un de l'autre, caractérisé en ce que l'anneau de flexion (5) est protégé des influences des forces radiales par friction lors de l'induction de forces sur le corps d'induction de forces (4) de manière que l'induction de forces sur le corps d'induction de forces (4) se fasse sans forces radiales.

7. Transducteur de force à anneau de flexion selon la revendication 6, caractérisé en ce que l'induction de forces se fait via un palier élastomère (20), de préférence un palier constitué de PTFE.

8. Transducteur de force à anneau de flexion selon la revendication 6, caractérisé en ce que l'induction de forces se fait via un élément tubulaire à paroi mince concentrique (14).

9. Transducteur de force à anneau de flexion selon la revendication 6, caractérisé an ce que l'induction de forces se fait via un élément de pression sphérique (25), qui s'appuie sur un élément de pression tronconique (27) via une surface de pression sphérique (26) et l'élément de pression tronconique (27) est reçu dans un alésage conique central (28) du corps inducteur de forces (4).

10. Transducteur de force à anneau de flexion selon la revendication 6, caractérisé en ce que l'induction de forces se fait via un appui pendulaire (11), qui s'appuie par une surface de pression sphérique (22) sur un élément de pression durci (23) qui s'appuie à son tour par une surface de pression sphérique (24) de plus grand rayon sur le corps inducteur de forces (4).

11. Transducteur de force à anneau de flexion comportant un palier annulaire externe (1) et un corps inducteur de forces interne (4) qui est raccordé respectivement via une arête de transmission de forces annulaire interne ou externe (6, 7) à un anneau de flexion (5) agencé concentriquement entre eux, qui porte des éléments de mesure de l'allongement (8) agencés à distance axiale l'un de l'autre, caractérisé en ce que l'anneau de flexion (5) est protégé des influences de forces radiales par friction lors de l'induction de forces sur le palier annulaire (1) de manière que l'induction de forces sur le palier annulaire (1) se fasse dans un plan qui coïncide au moins approximativement avec le plan central contenant les arêtes de transmission de forces annulaires (6, 7).
